Europäisches Patentamt

European Patent Office

Office européen des brevets

(19)

(11) Numéro de publication : **0 115 722**
**B1**

(12) **FASCICULE DE BREVET EUROPÉEN**

(45) Date de publication du fascicule du brevet :
10.09.86

(51) Int. Cl.⁴ : **F 01 N 3/02**, F 01 N 3/18

(21) Numéro de dépôt : **83402451.5**

(22) Date de dépôt : **16.12.83**

(54) **Dispositif de commande du processus de régénération d'un filtre à particules placé sur l'échappement d'un moteur à allumage par compression.**

(30) Priorité : 28.12.82 FR 8221942

(43) Date de publication de la demande :
15.08.84 Bulletin 84/33

(45) Mention de la délivrance du brevet :
10.09.86 Bulletin 86/37

(84) Etats contractants désignés :
DE GB IT SE

(56) Documents cités :
EP-A- 0 104 783
DE-A- 2 930 969
US-A- 4 281 512
US-A- 4 335 574

(73) Titulaire : AUTOMOBILES PEUGEOT
75, avenue de la Grande Armée
F-75116 Paris (FR)

AUTOMOBILES CITROEN
62 Boulevard Victor-Hugo
F-92200 Neuilly-sur-Seine (FR)

(72) Inventeur : Perez, Jean
5 Rue E. Manet
F-92500 Rueil Malmaison (FR)
Inventeur : Le Goff, Michel
5 Rue de la Fontaine aux Gobelins Bouviers
F-78280 Guyancourt (FR)

(74) Mandataire : Moncheny, Michel et al
c/o Cabinet Lavoix 2 Place d'Estienne d'Orves
F-75441 Paris Cedex 09 (FR)

EP 0 115 722 B1

Jouve, 18, rue St-Denis, 75001 Paris, France

## Description

La présente invention se rapporte à un dispositif permettant de commander le processus de régénération d'un filtre à particules placé sur la ligne d'échappement d'un moteur à allumage par compression.

On sait que les gaz d'échappement des moteurs à allumage par compression contiennent des particules solides, formées de suie, qu'il est souhaitable de retenir dans des filtres afin de réduire la pollution. Le colmatage progressif de ces filtres au cours de leur utilisation provoque, dans les collecteurs d'échappement, une contre-pression croissante qui diminue le rendement du moteur et dont l'importance deviendrait inacceptable si ces filtres n'étaient pas régénérés périodiquement.

La régénération des filtres à particules est généralement réalisée par brûlage des particules in situ. Pour amorcer cette combustion il est nécessaire d'élever la température du filtre, localement ou en totalité, par exemple à l'aide d'un brûleur ou d'une résistance électrique, ou encore en élevant la température des gaz d'échappement par modification des conditions de fonctionnement du moteur. Le réchauffage peut éventuellement être précédé d'une déviation du flux des gaz d'échappement soit vers une simple dérivation, soit vers un second filtre, l'oxygène nécessaire à la combustion étant fourni par un apport d'air.

Les dimensions des filtres étant nécessairement limitées par la place dont on dispose sous un véhicule automobile, leur régénération doit être assez fréquente, ce qui implique un déclenchement automatique, la régénération pouvant se faire pendant la marche normale du véhicule, sans intervention du conducteur.

Or, il est grandement souhaitable que le processus de régénération soit déclenché pour un niveau bien précis du colmatage. En effet, si le processus est déclenché pour un colmatage trop faible, la quantité de particules est insuffisante pour entretenir correctement la combustion, et la régénération est mauvaise. De plus, des régénérations trop fréquentes entraînent un accroissement de la consommation d'énergie.

Inversement, si le processus est déclenché pour un colmatage trop important, la régénération peut être insuffisante dans des zones où l'air nécessaire à la combustion passe avec difficulté, ou bien la quantité de chaleur dégagée par la combustion des particules peut entraîner la destruction du filtre.

Dans une solution connue, le processus de régénération est déclenché à partir d'un certain nombre de tours de fonctionnement du moteur ou d'un certain kilométrage parcouru par le véhicule. Malheureusement, le niveau de colmatage atteint à ce moment peut être très variable suivant les conditions dans lesquelles le moteur a été utilisé.

Une autre solution connue pour déclencher le processus de régénération consiste à mesurer la perte de charge à travers le filtre, le processus étant déclenché à partir d'un seuil fixe.

Malheureusement, cette indication n'est pas suffisamment précise, car la perte de charge à travers le filtre dépend non seulement de son niveau de colmatage, mais également des conditions de fonctionnement du moteur.

Enfin, le document EP-A-0 104 783 (non publié à la date de priorité du présent titre) prévoit de modifier la valeur du seuil précité en fonction du régime du moteur. La prise en compte de ce seul paramètre est cependant insuffisante pour obtenir un résultat tout à fait satisfaisant.

L'invention a pour but de remédier à ces inconvénients et de fournir un dispositif dans lequel le processus de régénération soit déclenché au moment optimal dans toutes les conditions d'utilisation du moteur.

Elle concerne un dispositif de commande du processus de régénération d'un filtre à particules placé sur l'échappement d'un moteur à allumage par compression, ce dispositif comprenant un capteur de mesure de la perte de charge à travers le filtre et des moyens pour déclencher le processus de régénération à partir d'un seuil donné de la perte de charge.

Ce dispositif est caractérisé en ce que des moyens sont prévus pour modifier la valeur dudit seuil en fonction de la vitesse de rotation et de la charge du moteur.

De préférence, lesdits moyens de modification de la valeur du seuil comprennent une mémoire contenant des valeurs de perte de charge correspondant à un taux de colmatage déterminé du filtre pour des valeurs différentes du régime et de la charge du moteur et des moyens pour sélectionner dans cette mémoire la valeur appropriée, en fonction des valeurs dudit régime et de ladite charge à un instant donné.

A cet effet, cette mémoire, dite cartographique comporte des entrées auxquelles sont appliquées des signaux représentatifs desdits régime et charge et une sortie fournissant un signal représsensatif de la valeur de seuil de la perte de charge.

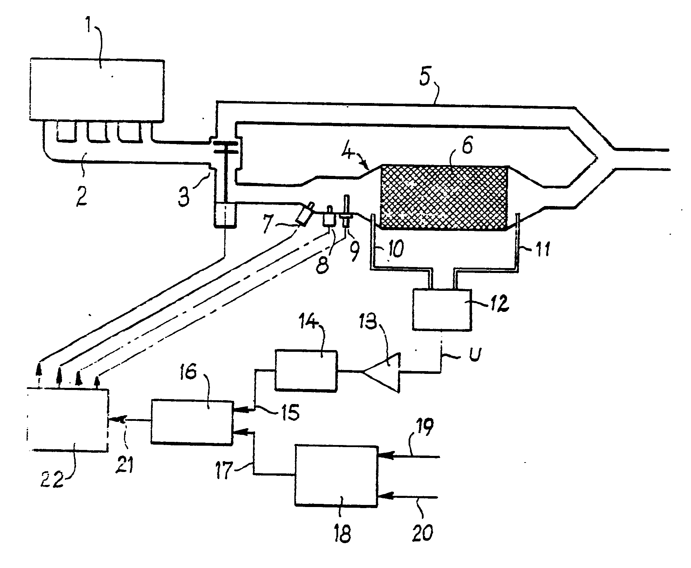

Un exemple de réalisation de l'invention fait l'objet de la description qui suit, en référence à la Figure unique jointe qui constitue un schéma du dispositif.

On a représenté sur cette Figure un moteur 1 à allumage par compression et son collecteur d'échappement 2. Ce dernier est relié à l'entrée d'une vanne à trois voies 3 destiné à orienter les gaz d'échappement, soit vers un filtre à particules 4, soit vers une dérivation 5.

Le filtre à particules comporte, ainsi qu'il est connu, un élément filtrant 6, proprement dit, et des moyens pour amorcer et entretenir la combustion des particules pendant la phase de régénération, à savoir, un injecteur d'air 7, un injecteur de carburant 8, une bougie de préchauffage 9.

Une prise de pression amont 10 et une prise de pression aval 11 sont reliées à un capteur 12 de pression différentielle qui fournit une tension U proportionnelle à la différence entre les deux pressions donc à la perte de charge à travers l'élément filtrant 6.

La tension U est appliquée à un amplificateur 13 et, après amplification, à un convertisseur analogique/numérique 14.

Le signal 15 émis par ce dernier est transmis à un comparateur 16 qui reçoit par ailleurs un signal de référence variable 17 délivré par une mémoire 18 dite « mémoire cartographique ». Cette mémoire contient des valeurs de référence de la perte de charge, correspondant à un taux de colmatage déterminé du filtre pour des valeurs différentes du régime et de la charge, taux à partir duquel le processus de régénération doit être déclenché. Elle est documentée à la suite des mesures au banc d'essais, qui permettent de définir avec précision, pour un moteur de type déterminé, pour chaque vitesse de rotation de ce moteur et chaque niveau de charge, la valeur de la perte de charge correspondant à un colmatage du filtre donné. La détermination de ces valeurs est à la portée de l'homme de l'art et il serait sans intérêt de faire figurer dans la présente description des valeurs qui, de toute façon, ne pourraient s'appliquer qu'à un cas particulier.

La mémoire 18 comporte deux entrées 19, 20 dont les signaux sont respectivement représentatifs de la vitesse de rotation et de la charge du moteur 1 et une sortie délivrant le signal 17.

Le signal 19 peut être fourni, ainsi qu'il est connu, par un capteur magnétique devant lequel défilent les dents de la couronne de démarrage du moteur, tandis que le signal 20 peut être obtenu, ainsi qu'il est également connu, à partir de la mesure de la quantité de carburant injecté dans un cylindre, à chaque levée d'aiguille de l'injecteur, cette quantité de carburant étant représentative de la charge du moteur.

A titre d'exemple, les composants précités peuvent être constitués par les composants portant les références ci-dessous de la firme NATIONAL SEMICONDUCTOR des Etats-Unis d'Amérique :

— Amplificateur   13 = LM 308
— Convertisseur   14 = ADC 0804
— Comparateur   16 = CD 4063
— Mémoire   18 = IM 6653

La sortie 21 du comparateur 16 est reliée, ainsi qu'il est connu à un circuit électronique 22 de commande de la vanne à trois voies 3 et des différents moyens d'amorçage et d'entretien de la combustion des particules pendant la phase de régénération qui est déclenchée automatiquement dès que le signal 15 atteint le signal 17 de référence variable.

Grâce à la disposition décrite ci-dessus, on est toujours assuré de déclencher le processus de régénération pour un même niveau de colmatage du filtre, ce qui était bien le but de l'invention.

Il va de soi que le procédé de régénération lui-même est totalement indépendant de l'invention, et qu'il peut être de tout type connu.

## Revendications

1. Dispositif de commande du processus de régénération d'un filtre (8) à particules placé sur l'échappement (2) d'un moteur (1) à allumage par compression, comprenant un capteur (12) de mesure de la perte de charge à travers le filtre et des moyens pour comparer la perte de charge mesurée à une valeur de seuil et déclencher le processus de régénération lorsque la valeur de seuil est atteinte, caractérisé en ce que des moyens (18, 19, 20) sont prévus pour modifier la valeur dudit seuil en fonction de la vitesse de rotation et de la charge du moteur.

2. Dispositif de commande suivant la revendication 1, caractérisé en ce que les moyens de modification de la valeur de seuil comprennent une mémoire (18) contenant des valeurs de référence de la perte de charge, correspondant à un taux de colmatage déterminé du filtre pour des valeurs différentes du régime de la charge du moteur et des moyens (19, 20) pour sélectionner dans cette mémoire la valeur appropriée, en fonction des valeurs desdits régime et charge à un instant donné.

3. Dispositif de commande suivant la revendication 2, caractérisé en ce que ladite mémoire comporte des entrées (19, 20) auxquelles sont appliqués des signaux représentatifs desdits régime et charge et une sortie (17) fournissant un signal représentatif de la valeur de seuil de la perte de charge.

## Claims

1. Device for controlling the process of regeneration of a particle filter (6) placed in the exhaust (2) of a compression ignited engine (1), comprising a sensor (12) measuring the pressure drop across the filter and means for comparing the measured pressure drop with a threshold value and initiating the process of regeneration when the threshold value is reached, characterized in that means (18, 19, 20) are provided for modifying the value of said threshold as a function of the running speed and the load of the engine.

2. Control device according to claim 1, characterized in that the means for modifying the threshold value comprise a memory (18) containing set values of pressure drop, corresponding to a given clogging of the filter for different values of the running speed and load of the engine, and means (19, 20) for selecting in said memory the appropriate value, as a function of the values of said speed and load at a given instant.

3. Control device according to claim 2, wherein said memory comprises inputs (19, 20) to which are applied signals representing said speed and load and an output (17) delivering a signal representing the threshold value of the pressure drop.

## Patentansprüche

1. Vorrichtung zur Regelung des Vorganges der Regeneration eines im Auspuff (2) eines Motors (1) mit Kompressionszündung sitzenden Teilchenfilters (6), mit einem Meßfühler (12) zur Messung des Druckverlustes über dem Filter und Mitteln zum Vergleichen des gemessenen Druckverlustes mit einem Schwellenwert und Auslösen des Regenerationsvorganges, wenn der Schwellenwert erreicht ist, dadurch gekennzeichnet, daß Mittel (18, 19, 20) zur Veränderung dieses Schwellenwertes in Abhängigkeit von der Drehzahl und Belastung des Motors vorgesehen sind.

2. Regelvorrichtung nach Anspruch 1, dadurch gekennzeichnet, daß die Mittel zur Veränderung des Schwellenwertes einen Speicher (18), welcher Bezugswerte für den Druckverlust enthält, die einem bestimmten Verstopfungsgrad des Filters für verschiedene Werte des Betriebszustandes und der Belastung des Motors entsprechen, und Mittel (19, 20) zur Auswahl des geeigneten Wertes im Speicher in Abhängigkeit von den Werten für den Betriebszustand und die Belastung in einem gegebenen Augenblick umfassen.

3. Regelvorrichtung nach Anspruch 2, dadurch gekennzeichnet, daß der Speicher Eingänge (19, 20), auf welche den Betriebszustand und die Belastung darstellende Signale gegeben werden, und einen Ausgang (17), welcher ein den Schwellenwert für den Druckverlust darstellendes Signal liefert, umfaßt.